Europäisches Patentamt

(19) European Patent Office

Office européen des brevets

(11) Numéro de publication: **0 360 308**
**A2**

(12) # DEMANDE DE BREVET EUROPEEN

(21) Numéro de dépôt: **89201972.0**

(51) Int. Cl.⁵: **A01K 1/02**

(22) Date de dépôt: **27.07.89**

(30) Priorité: **23.09.88 BE 8801093**

(43) Date de publication de la demande:
**28.03.90 Bulletin 90/13**

(84) Etats contractants désignés:
**AT BE CH DE ES FR GB GR IT LI LU NL SE**

(71) Demandeur: **GEERKENS**
**Weg op Bree 96**
**B-3578 Meeuwen(BE)**

(72) Inventeur: **Geerkens, Lambert**
**Beemdstraat 54**
**B-3578 Meeuwen(BE)**

(74) Mandataire: **Pieraerts, Jacques et al**
**Bureau Gevers S.A. rue de Livourne 7 bte 1**
**B-1050 Bruxelles(BE)**

(54) **Dispositif d'hébergement comprenant un espace d'hébergement pour truie et un espace d'hébergement pour porcelets.**

(57) L'invention concerne un dispositif d'hébergement comprenant un espace d'hébergement pour truie et un espace d'hébergement pour porcelets, comportent des moyens pour modifier la hauteur de l'espace d'hébergement pour truie (4) par rapport à l'espace d'hébergement pour les porcelets (5) en fonction de la position de la truie, se basant sur la constatation que durant la période qui suit la mise bas, la truie va régulièrement se coucher lorsque les porcelets doivent téter.

Fig.1.

EP 0 360 308 A2

# Dispositif d'hébergement comprenant un espace d'hébergement pour truie et un espace d'hébergement pour porcelets

L'invention se rapporte à un dispositif d'hébergement comprenant un espace d'hébergement pour truie et un espace d'hébergement pour porcelets.

Le but de l'invention consiste à présenter un dispositif d'hébergement permettant de laisser la truie après qu'elle ait mis bas sans surveillance et qu'en outre le phénomène "d'étouffement" des porcelets qui survient beaucoup dans les premiers jours suivant la mise bas est évité. De très jeunes porcelets sont facilement etouffés par la truie lorsqu'elle va se coucher sur les porcelets. La perte de jeunes animaux peut être considérée comme relativement grande.

Afin d'exclure ce phénomène on prévoit, suivant l'invention, des moyens pour modifier la hauteur de l'espace d'hébergement pour truie en fonction de la position de la truie, sur base de la constatation que durant la période qui suit la mise-bas, la truie va régulièrement se coucher lorsque les porcelets doivent téter.

Toujours suivant l'invention, l'espace d'hébergement pour les porcelets est disposé au moins le long d'un côté de l'espace d'hébergement pour truie et l'espace d'hébergement pour truie qui est déplaçable en hauteur, se rattache étroitement à l'espace d'hébergement susmentionné pour les porcelets qui est prévu latéralement.

Dans une forme de réalisation appliquée de préférence la cellule précitée ou son équivalent technique est agencée pour agir uniquement sur les moyens destinés à modifier la hauteur de l'espace d'hébergement pour truie par rapport à l'espace d'hébergement pour les porcelets après l'action d'un relais temporisateur.

Il est avantageux que l'espace d'hébergement pour les porcelets précité est pourvu au moins localement de moyens de chauffage.

D'autres détails et avantages de l'invention apparaîtront de la description ci-après d'un espace d'hébergement pour truie suivant l'invention. Cette description est donnée uniquement à titre d'exemple et ne limite pas l'invention. Les références se rapportent aux figures ci-annexées.

La figure 1 est une vue en perspective du dispositif d'hébergement pour truie suivant l'invention.

La figure 2 est une vue en perspective partielle du même dispositif d'hébergement en position descendue de l'espace d'hébergement pour truie.

La figure 3 est une vue analogue à la figure 2 en position relevée proprement dite du dispositif d'hébergement.

Le dispositif d'hébergement suivant les figures est formée par un châssis qui est indiqué par la référence générale 1 et qui peut adopter n'importe quelle forme mais qui, de préférence, comporte de deux côtés chaque fois deux montants 2 qui sont reliés entre eux par un longeron 3. Toute autre structure du châssis peut évidemment être envisagée.

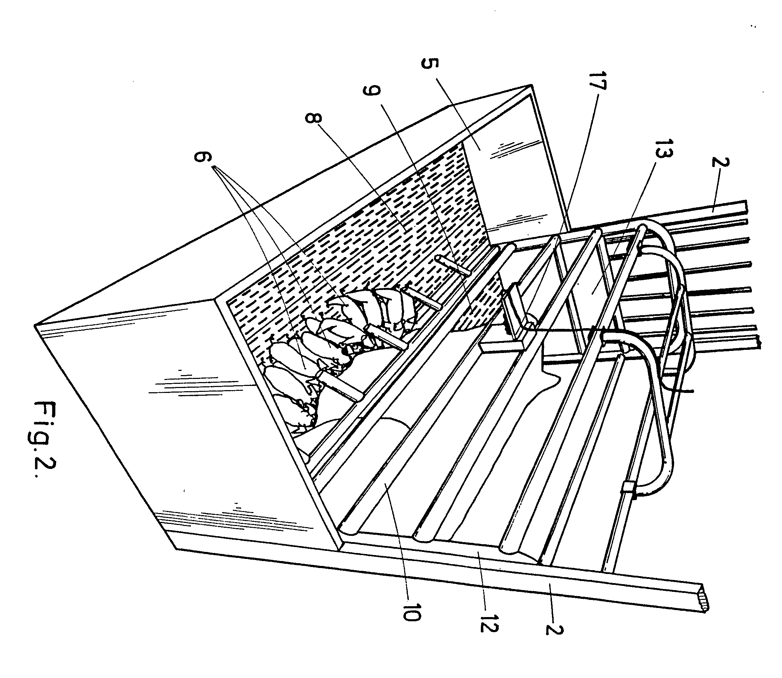

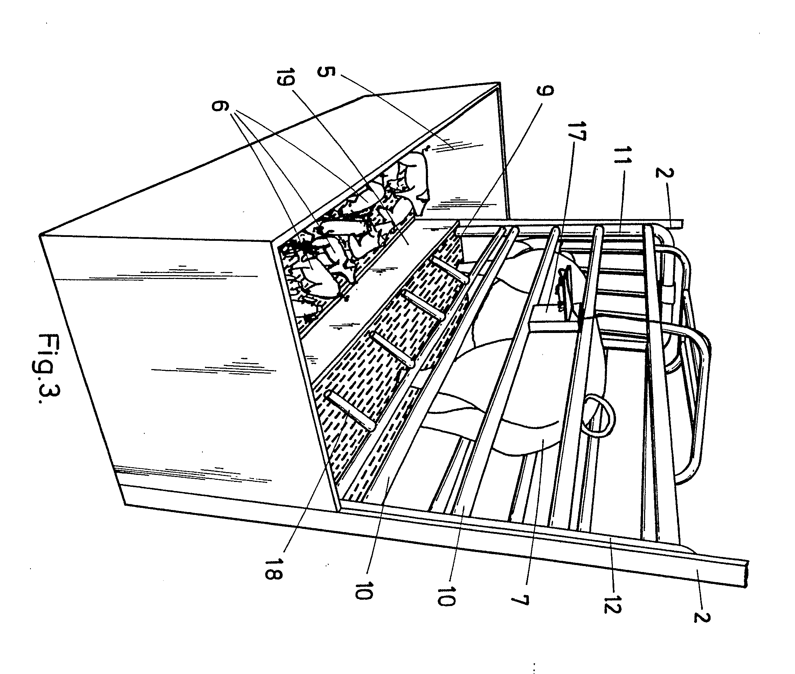

La présence d'un espace d'hébergement pour truie 4 qui est déplaçable en hauteur par rapport à au moins un mais de préférence à deux espaces destinés au porcelets 5 est caractéristique de l'invention. Les porcelets sont indiqués dans les figures 2 et 3 par la référence 6 tandis que la truie est indiquée est indiquée par la référence 7. L'espace d'hébergement pour les porcelets présente un fond perforé 8 dont au moins une partie est pourvue de moyens de chauffage. Mais il est clair que cet espace peut avoir n'importe quelle autre forme.

L'espace d'hébergement pour truie 4 présente un fond 9, une série de barres longitudinales 10 et dans chacune des extrémités considérées dans le sens longitudinal des tuyaux en forme de U renversé 11 et 12. Le long du côté du tuyau en forme de U 11 il est prévu la mangeoire 13 qui peut être amenée à basculer pour un nettoyage efficace, tandis qu'à l'autre extrémité, où se trouve le tuyau en forme de U renversé 12, un petit bord ou grillage 14 est appliqué.

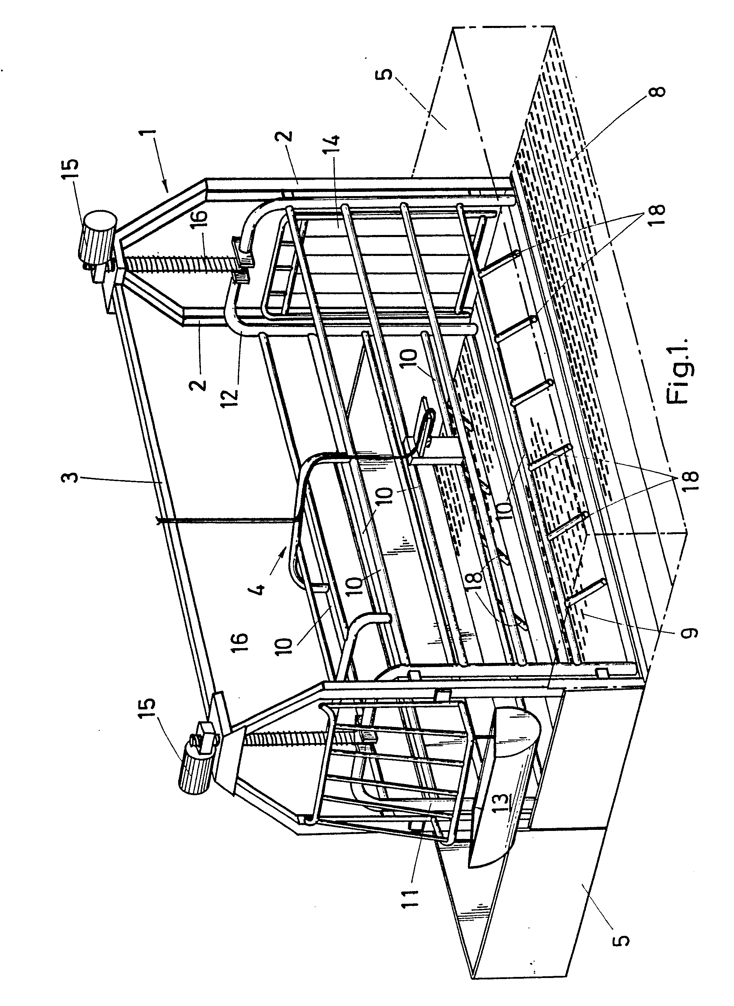

Les deux tuyaux en forme de U 11 et 12 qui sont reliés au fond 9 sur lequel les barres longitudinales 10 sont fixées peuvent être déplacés en hauteur de façon que le fond 9 de l'espace d'hébergement pour truie 4 puisse être réglé à deux niveaux. En premier lieu le fond 9 de l'espace d'hébergement pour truie 4 peut arriver exactement à hauteur du fond 8 de l'espace d'hébergement pour les porcelets 5 (figures 1 et 2) ou à une hauteur de celle-ci (figure 3).

Le déplacement vers le haut et vers le bas de l'espace d'hébergement pour truie 4 par rapport à l'espace d'hébergement 5 pour les porcelets est réalisé à l'aide des éléctromoteurs 15 qui provoquent, par l'utilisation de moyens connus qui ne doivent pas être décrits davantage, la rotation de tiges 16 pourvues d'un filetage.

Par la rotation des tiges 16 qui présentent en dessous une liaison en rotation libre avec les tuyaux en forme de U 11 et 12, l'espace d'hébergement pour truie 4 peut être déplacé vers le haut et vers le bas.

Une cellule photoélectrique 17 détecte la position de la truie dans l'espace d'hébergement pour truie 4. Lorsque la truie se lève, le rayon lumineux de la cellule photoélectrique est interrompu et les électromoteurs sont mis en service de façon que l'espace d'hébergement pour truie 4 soit amené à un niveau supérieur par rapport au niveau de l'espace d'hébergement pour les porcelets 5. En enclenchant un relais temporisateur (15 secondes) la mise en service superflue des électromoteurs est évitée par suite d'un déplacement accidentel de la truie qui ne peut pas être considéré comme une position de couche définitive.

Il est également prévu au bord inférieur de l'un des tuyaux en forme de U 11 et 12 une sécurité de façon que l'espace d'hébergement ne puisse jamais descendre en deça du niveau requis par rapport au fond de l'espace d'hébergement pour les porcelets.

Inversément lorsque la truie va se coucher, ce qui signifie qu'elle désire allaiter les porcelets, la cellule photoélectrique 17 reçoit un signal lumineux et les électromoteurs sont de nouveau mis en service. L'espace d'hébergement pour truie 4 descend jusqu'à ce que le fond 9 de celui-ci soit venu se mettre au niveau du fond 8 de l'espace d'hébergement pour les porcelets 5. Les porcelets peuvent se rendre d'un espace d'hébergement 5 à l'autre parce que derrière la truie il est encore prévu un petit grillage courant qui n'est pas visible sur les figures et par lequel un passage est maintenu pour les porcelets entre les deux espaces 5 le long des deux côtés de l'espace d'hébergement pour truie 4.

Des barrettes 18 orientées en oblique vers le bas sont prévues sur la barre longitudinale inférieure 10. Ces barrettes sont de manière générale connues en soi.

Le déplacement vers le haut et vers le bas de l'espace d'hébergement pour truie a lieu de manière suffisamment lente, donc à un rythme tel que les porcelets qui se trouveraient temporairement dans l'espace d'hébergement pour truie ne puissent pas être blessés.

Comme le lieu où réside la truie, notamment l'espace d'hébergement pour truie 4, forme une entité séparée par rapport au lieu où résident les porcelets, à savoir l'espace d'hébergement 5, la truie ne peut plus blesser les porcelets en allant se coucher subitement. Jusqu'à présent ceci constituait la cause d'une mortalité élevée parmi les jeunes animaux. Il est clair que le fond 9 de l'espace d'hébergement pour truie 4 est prévu latéralement de plaques de protection 19 qui se rattachent étroitement au fond 8 de l'espace d'hébergement pour les porcelets 5 de façon qu'ils ne puissent pas être blessés lors de mouvements vers le haut et vers le bas, surtout lors de ce dernier mouvement, de l'espace d'hébergement pour truie.

Il apparaît très clairement de la description du dispositif d'hébergement pour truie suivant l'invention qui vient d'être donnée très clairement que la mortalité des jeunes animaux, qui est due au fait que la truie peut écraser les jeunes porcelets lorsqu'elle se couche, peut à présent être totalement évitée. Jusqu'à présent on pouvait observer une mortalité chez les jeunes porcelets allant jusqu'à 50% avec certaines truies. Dû au fait que la truie ne peut aller se coucher que lorsque les porcelets sont hors de sa portée on a à présent trouvé une solution idéale à ce problème.

Il est clair également que l'invention n'est pas limitée à la forme de réalisation décrite ci-dessus et que de nombreuses modifications pourraient être apportées à celle-ci sans sortir du cadre de la présente demande de brevet.

## Revendications

1. Dispositif d'hébergement comprenant un espace d'hébergement pour truie et un espace d'hébergement pour porcelets, caractérisé en ce qu il comporte des moyens pour modifier la hauteur de l'espace d'hébergement pour truie (4) par rapport à l'espace d'hébergement pour les porcelets (5) en fonction de la position de la truie, se basant sur la constatation que durant la période qui suit la mise bas, la truie va régulièrement se coucher lorsque les porcelets doivent téter.

2. Dispositif d'hébergement suivant la revendication 1, caractérisé en ce que l'espace d'hébergement pour les porcelets (5) est disposé au moins le long d'un côté de l'espace d'hébergement pour truie (4) et que l'espace d'hébergement pour truie qui est déplaçable en hauteur (4) se rattache étroitement à l'espace d'hébergement susmentionné pour les porcelets prévu latéralement.

3. Dispositif d'hébergement suivant l'une des revendications 1 et 2, caracactérisé en ce que l'espace d'hébergement pour truie précité (4) est pourvu de parois latérales (19) qui se rattachent latéralement à un fond de l'espace d'hébergement pour les porcelets (5).

4. Dispositif d'hébergement suivant l'une des revendications 1 à 3, caractérisé en ce qu'il comporte des moyens de détection de la position de la truie (7), lesquels moyens de détection sont formés d'une cellule photoélectrique (17) ou d'un moyen techniquement équivalent.

5. Dispositif d'hébergement suivant la revendication 4, caractérisé en ce que la cellule précitée (17) ou son équivalent technique est agencée pour agir uniquement sur les moyens pour modifier la hauteur de l'espace d'hébergement pour truie (4) par rapport à l'espace d'hébergement pour les porcelets (5) après l'action d'un relais temporisateur.

6. Dispositif d'hébergement suivant l'une des revendications 1 à 5, caractérisé en ce qu'il comporte une mangeoire pour la truie, agencée à une hauteur qui peut être atteinte lorsque l'espace d'hébergement pour truie (4) se trouve dans sa position la plus élevée par rapport à l'espace d'hébergement pour porcelets (5).

7. Dispositif d'hébergement suivant l'une des revendications 1 à 6, caractérisé en ce qu'il comporte deux espaces d'hébergement pour porcelets (5) notamment une le long des deux côtés de l'espace d'hébergement pour truie

8. Dispositif d'hébergement suivant l'une des revendications 1 à 7, caractérisé en ce que l'espace d'hébergement pour les porcelets précité (5) est pourvu au moins localement de moyens de chauffage.

9. Dispositif d'hébergement suivant l'une des revendications 1 à 8, caractérisé en ce que l'espace d'hébergement pour truie précitée (4) est déplacé en hauteur par rapport à l'espace d'hébergement pour porcelets par au moins un mais de préférence par deux électromoteurs 15.

10. Dispositif d'hébergement suivant l'une des revendications 1 à 9, caractérisé en ce que l'espace d'hébergement pour truie précité est pourvu latéralement de barres longitudinales (10).

11. Dispositif d'hébergement suivant la revendication 10, caractérisé en ce que la barre inférieure (10) est pourvue de barrettes transversales qui s'étendent vers le bas en biais.

Fig.1.

EP 0 360 308 A2

Fig.2.

Fig.3.